**Europäisches Patentamt**

**European Patent Office**

**Office européen des brevets**

(11) Veröffentlichungsnummer: **0 071 873**
**A2**

# (12) EUROPÄISCHE PATENTANMELDUNG

(21) Anmeldenummer: **82106783.2**

(22) Anmeldetag: **27.07.82**

(51) Int. Cl.³: **G 01 V 3/08**

---

(30) Priorität: **03.08.81 HU 224881**

(43) Veröffentlichungstag der Anmeldung: **16.02.83**
**Patentblatt 83/7**

(84) Benannte Vertragsstaaten: **AT CH DE FR GB IT LI NL SE**

(71) Anmelder: **Vilati Villamos Automatika Fövállalkozo és Gyárto Vállalat, Krisztina krt. 55, HU-1013 Budapest (HU)**

(72) Erfinder: **Dülk, Károly, Soroksári ut 6, HU-1095 Budapest (HU)**

(74) Vertreter: **Lehn, Werner, Dipl.-Ing. et al, Hoffmann, Eitle & Partner Patentanwälte Arabellastrasse 4 (Sternhaus), D-8000 München 81 (DE)**

---

(54) **Verfahren und Schaltungsanordnung zum Wahrnehmen von Gegenständen mit einer Leiterschleife.**

(57) Die Erfindung betrifft ein Verfahren und eine Schaltungsanordnung zum Wahrnehmen von Gegenständen; das hier verwendete Detektorelement ist eine eingängige oder mehrgängige Wicklung (Schleife) von beliebigem Format und ist zum Wahrnehmen von elektrisch leitenden Gegenständen geeignet.

Mit der Erfindung soll vermieden werden, daß, wenn der Gegenstand den gemessenen Parameter (z.B. die Induktivität der Schleife) nur gering beeinflußt, die Dauer der Messung des Absolutwertes beschränkt ist bzw. die Zuverlässigkeit der Messung beeinträchtigt wird. Der Wirbelstrom-Schleifendedektor realisiert die Messung in einem dreistufigen Zyklus:

1. Mit einem durch eine Schleife (H) geführten Gleichstrom wird ein permanentes magnetisches Feld erregt, das teilweise in den leitenden Gegenstand (L) eindringt.

2. Nach erfolgter Abschaltung des Stromes wird der schnelle Ablauf des selbstinduktiven transienten Vorgangs in der Schleife (H) sichergestellt.

3. Die Änderung des durch die Meßschleife (H) fließenden Teils des in dem elektrisch leitenden Gegenstand (L) von den Wirbelströmen aufrechterhaltenen, langsam abnehmenden Flusses wird wahrgenommen und ausgewertet, wonach an dem Ausgang eine der Entfernung des Gegenstands (L) bzw. dessen Qualität entsprechende logische Information geliefert wird.

Durch die Wiederholung des beschriebenen Zyklus mit der gewünschten Häufigkeit kann der Wirbelstrom-Detektor zur kontinuierlichen Messung der Position des Gegenstands (L) verwendet werden.

Verfahren und Schaltungsanordnung zum Wahrnehmen von Gegenständen mit einer Leiterschleife

Die Erfindung betrifft ein Verfahren und eine Schaltungsanordnung zum Wahrnehmen von Gegenständen mit einer Leiterschleife, insbesondere zum Wahrnehmen von Metallgegenständen, wie z.B. Kraftfahrzeugen in dem Straßenverkehr, Rohrleitungen oder sonstigen elektrisch leitenden Gegenständen.

Es ist bekannt, daß das Wahrnehmen von Gegenständen mit einer Leiterschleife zahlreiche Vorteile aufweist, so z.B.:

- der zum Wahrnehmen bestimmte Raumteil kann gut abgegrenzt werden,

- durch die Änderung der Schleifengeometrie können die Wahrnehmungsgrenzen geändert werden,

- elektrisch nicht leitende Gegenstände üben keine Störwirkung auf die Messung aus,

- die Meßeinheit beansprucht keine Wartung.

Aus den bekannten Verfahren sind die eine induktive Schleife verwendenden Verfahren am bekanntesten, bei denen die Schleife im allgemeinen das induktive Glied eines Schwingkreises (meistens mit einer Frequenz über 10 kHz) darstellt. Das Wahrnehmen selbst beruht auf der Erscheinung, daß die in der Nähe der Schleife liegenden elektrisch leitenden Gegenstände die Induktivität der Schleife infolge der Wirbelstromwirkung durch Verdrängen des Flusses aus ihrem eigenen Volumen beeinflussen. Infolge der Änderung der Induktivität ändert sich auch die Frequenz des Resonanzkreises, wobei diese Änderung mit der Entfernung, in der sich der Gegenstand befindet, bzw. mit den sonstigen Parametern in Verbindung steht. Die Messung erfolgt in einer Phase.

Ein derartiges Verfahren ist in der US-A- 3 943 339 "Inductive loop detector system" beschrieben. Ein im Hinblick auf die Signalverarbeitung abweichendes, aber ebenfalls eine Induktionsschleife verwendendes Verfahren ist in der US-A- 2 943 306 und der US-A- 3 164 802 sowie in der DE-B- 2 817 670 beschrieben. Die erwähnten Verfahren weisen neben den vorher geschilderten Vorteilen die folgenden nachteiligen Eigenschaften auf:

Sollte die von dem Gegenstand hervorgerufene Schleifeninduktivitätsänderung infolge des geringen Volumens des Gegenstands oder eines großen Abstands klein sein (z.B. in einer Größenordnung von $10^{-2}$ oder noch weniger), so ist die Wahrnehmung mittels fortlaufender Messung der absoluten Induktivität mit Schwierigkeiten verbunden und kann über eine gewisse Grenze hinaus nicht einmal realisiert werden.

Die Schwierigkeiten sind darauf zurückzuführen, daß die eigenen Parameter des Resonanzkreises und des verarbeitenden Stromkreises infolge der Temperatur, der Alterung der Bestandteile usw. gleicherweise einer Änderung unterworfen sind, was bei kleinen Signalen zu falschem Wahrnehmen führt. Auch in Fällen, in denen ideale, d.h. endlos stabile Stromkreiselemente angenommen werden, kann der sich aus der Deformation der Schleife ergebende Fehler nicht eliminiert werden.

Daher sind die Induktionsschleifenverfahren nicht auf der absoluten, sondern auf der relativen Induktivitätsmessung aufgebaut, d.h. es wird nur die Änderung der Induktivität dem in dem vorangehenden Zeitpunkt gemessenen Wert gegen-

- 3 -                                    0071873

übergestellt.

Um einen Zusammenhang zwischen dieser relativen Änderung und dem Gegenstand festlegen zu können, werden verschiedene Lösungen einerseits in den früher erwähnten Publikationen, andererseits in der FR-A- 1 555 659 "Fahrzeugdetektor" und in der JP-A- 42-52834 "Anordnung zum Nachweisen von Fahrzeugen auf einer mehrspurigen Straße" vorgeschlagen. Die den Induktionsschleifendetektor verwendenden Verfahren weisen jedoch infolge der relativen Meßmethode zwei grundsätzliche Nachteile auf.

Einer der Nachteile besteht darin, daß der Gegenstand, wenn er eine gewisse Zeit lang seine Position nicht ändert, von dem Detektor "vergessen" wird.

Andererseits ist der Detektor nach erfolgter Einschaltung ober beim Ausbleiben der Speisespannung nicht fähig, die Entscheidung zu treffen (da ihm der Wert der vorherigen Schleifeninduktivität unbekannt ist), ob ein wahrzunehmender Gegenstand in seiner Umgebung vorhanden ist oder nicht.

Für den aufgrund der US-A- 3 943 339 von der Firma CANOGA hergestellten Induktionsschleifendetektor - der die besten Parameter unter den bekannten Anordnungen aufweisen dürfte - wird eine Haltezeit von maximal einer Stunde garantiert, wenn der Gegenstand eine Schleifeninduktivitätsänderung der Größenordnung von $10^{-3}$ hervorruft.

Der Erfindung wurde das Ziel gesetzt, ein Verfahren und eine Schaltungsanordnung zu schaffen, die mit den bekannten Verfahren und Anordnungen verglichen eine genauere Messung ermöglichen, nach erfolgter Einschaltung sofort eine richtige Information liefern, und in der sogenannten

- 4 -

0071873

"Haltezeit" nicht beschränkt sind.

Das gesetzte Ziel wird unter Anwendung eines Verfahrens erreicht, das aus drei Phasen zusammengesetzt ist:

- die Leiterschleife wird mit einer Gleichstromerregung minimal solange versorgt, bis der Fluß der Schleife trotz der in dem elektrisch leitenden, sich im Bereich der Schleife befindenden Gegenstand oder in dessen Oberflächenschicht entstehenden Wirbelströme in einem sich dem statischen Zustand annähernden Maß in den Gegenstand eindringt;

- die Erregung der Leiterschleife wird unterbrochen und man wartet darauf, bis in der Schleife die selbstinduktiven transienten Erscheinungen praktisch beendet sind; und zuletzt

- in der        Leiterschleife wird die Spannung gemessen, die von der langsamen Abnahme des Flusses - der seinerseits von den in dem Gegenstand fließenden Wirbelströmen (die eine entgegengesetzte Polarität wie beim Einschalten aufweisen) aufrechterhalten wird - induziert wird.

Einzelheiten des erfindungsgemäßen Verfahrens und der zugehörigen Schaltungsanordnung gehen aus den Ansprüchen hervor.

Die Erfindung ist im folgenden an vorteilhaften Ausführungsbeispielen und anhand der Zeichnungen näher erläutert. Es zeigen in den Zeichnungen

Fig.  1  ein Schaltbild einer erfindungsgemäßen Schaltungsanordnung, bei der die Erregerschleife und

0071873

die Meßschleife als eine gemeinsame Schleife ausgebildet sind und der wahrzunehmende Gegenstand nicht aus einem ferromagnetischen Grundstoff hergestellt ist,

Fig. 2 eine schematische Darstellung einer Erregerschleife und einer Meßschleife,

Fig. 3 eine Schaltungsanordnung als Beispiel für den Aufbau des Steuerstromkreises,

Fig. 4 eine Version mit einer geteilten Steuereinheit,

Fig. 5A und 5B die Gestaltung der einfachsten kompensierten Schleifen.

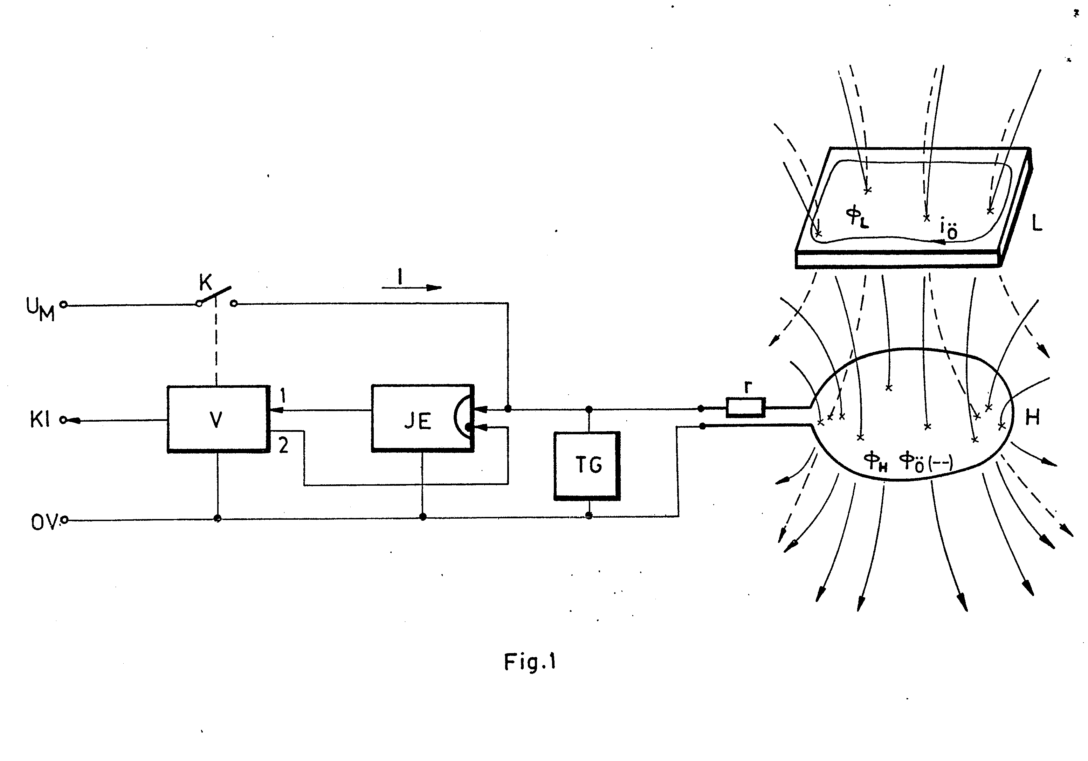

Das wesentliche des erfindungsgemäßen Verfahrens wird anhand der in der Fig. 1 dargestellten Schaltungsanordnung erläutert. In der Figur ist ein elektrisch leitender Gegenstand L zu sehen, der sich in der Nähe einer Schleife H befindet. Das eine Ende der Schleife H befindet sich an einem Punkt OV, während das andere Ende über einen Widerstand r mit der einen Klemme eines Überstrombegrenzers TG, dem einen Pol eines Schaltelements K und dem Eingang eines Signalumformer-Verstärkerstromkreises JE verbunden ist. Der andere Pol des Schaltelements K ist an einer Spannung $U_M$ angeschlossen. Der Ausgang des Signalformer-Verstärkerstromkreises JE ist an einen Eingang eines Steuerstromkreises V angeschlossen, dessen einer Ausgang mit dem Steuereingang des Schaltelements K verbunden ist (in der Fig. 1 mit einer unterbrochenen Linie eingezeichnet), während der andere Ausgang mit dem Inhibitionseingang des Signalumformer-Verstärkerstromkreises JE verbunden ist, und zuletzt mit dem Ausgang KI versehen ist. Der Widerstand r ist im allgemeinen der innere Widerstand der Schleife.

Zunächst wird der Zustand beschrieben, wenn der elektrisch leitende Gegenstand L sich nicht in der Nähe der Schleife H befindet.

Wird das Schaltelement K geschlossen, so wird auf die Schleife H Strom gegeben (erste Phase). Um Verluste vermindern zu können, ist es zweckmäßig, wenn der Strom grundsätzlich nur durch die Induktivität der Schleife H und den ohmschen Widerstand des Widerstands r beschränkt wird.

Dies ist der Strom, dessen Gleichstromkomponente dominiert, bzw. der Gleichstrom, der in der Schleife H einen Fluß $\emptyset_H$ erzeugt.

Nach erfolgter Abschaltung des Schaltelements K hört der Fluß $\emptyset_H$ in Abhängigkeit der von dem Überstrombegrenzer TG - der zweckmäßig ein Element mit einem Zenercharakter ist - bestimmten Spannung binnen kurzem vollständig auf (der transiente Selbstinduktionsprozess ist beendet - zweite Phase).

Darauffolgend befindet sich die Schleife H im Ruhestand, der Wert der Spannung an den Klemmenpunkten ist theoretisch gleich Null.

Die Funktion des Überstrombegrenzers TG kann auch von einer anderen Einheit des Stromkreises übernommen werden. Desweiteren ist an die Schleife H der Signalumformer-Verstärkerstromkreis JE - der inhibitiert werden kann - angeschlossen, der vom Beginn des Schließens des Schaltelements K bis zur Beendigung des transienten Vorgangs von einem Steuerstromkreis V inhibitiert wird. Der Ausgang des Signalumwandler-Verstärkerstromkreises JE - der zweckmäßig mit einem integrierenden Störschutz versehen ist -
ist mit dem Eingang des Steuerstromkreises V verbunden.
Neben der Steuerung der sonstigen Stromkreise des Detektors
übt der Steuerstromkreis V vergleichende, signalverarbeitende und Anpassungsfunktionen aus.

Dementsprechend nimmt der Signalumwandler-Verstärkerstromkreis JE nach Beendigung des selbstinduktiven transienten
Vorgangs, wenn die Inhibition für eine Zeit aufgehoben
wird, eine Probe von der an den Klemmenpunkten der Schleife
meßbaren, in de Signalumwandler-Verstärker JE vorverarbeiteten Spannung (dritte Phase).

Im Hinblick darauf, daß die Spannung praktisch Null ist,
gibt der Steuerstromkreis V eine entsprechende logische
Information an den Ausgang KI ab, wonach mit der vorher
eingestellten Häufigkeit die Meßperiode wieder in Gang
gesetzt wird.

Sollte in der Umgebung der Schleife H ein elektrisch leitender Gegenstand L (z.B. ein Metallblech) vorhanden sein,
ändert sich der Vorgang wie folgt:

Der Teil $\emptyset_L$ des Flusses $\emptyset_H$ dringt mit einer von den in dem
Metallblech L entstandenen Wirbelströmen abhängenden Geschwindigkeit in das Blech ein (bzw. durchquert dieses)
und verbindet das Blech mit der Schleife.

Die Dauer des Schließens des Schaltelements K wird von dem
Steuerstromkreis V derart gesteuert, daß sich das Maß des
Flußanschlusses zweckmäßig dem statischen Wert nähert.

Nach erfolgter Abschaltung des Schaltelements K hört der
Flußteil $\emptyset_H - \emptyset_L$, der das Blech nicht durchquert hatte,

0071873

auf die im Zusammenhang mit der ersten Methode erwähnte Weise schnell auf.

Den durch das Metallblech L dringenden Fluß $\emptyset_L$ lassen die in dem Blech entstehenden Wirbelströme $i_ö$ nur langsam aufhören.

Dem Aufhören des Schleifenstroms I folgend wird der Fluß $\emptyset_L$ in dem Feld umgeordnet, und - da jetzt das Metallblech L bereits ein erregendes Element darstellt - wird nur ein Teil $\emptyset_ö$ des Flusses $\emptyset_L$ durch die Schleife H gehen. Die langsame Abnahme des Flusses $\emptyset_ö$ induziert eine Gleichspannung in der Schleife H, die während der Probeentnahmedauer wohl erkannt werden kann.

So findet ein elementarer Meßzyklus in drei Phasen statt. Wird nun der Zyklus mit der gewünschten Häufigkeit wiederholt, kann eine kontinuierliche Messung realisisert werden.

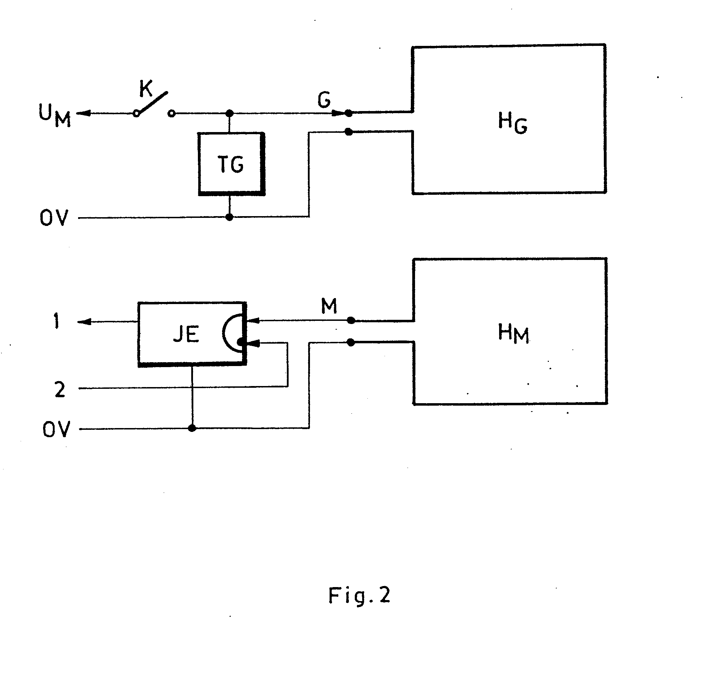

Der in dem Beispiel beschriebene Vorgang spielt sich bei mehrschleifigen Anordnungen und/oder bei ferromagnetischen Gegenständen auf ähnliche Weise ab, mit dem Unterschied, daß sich die Anordnung des Flusses ändert. Der Schleifenanschluß einer zweischleifigen Anordnung ist in Fig. 2 dargestellt. Die hier nicht dargestellten Einheiten des Stromkreises stimmen mit denen nach Fig. 1 überein.

Nach dem jeweiligen Bedarf kann die Steuereinheit V die während der Probeentnahmedauer erhaltenen Signale mit veränderlichen Amplituden auf verschiedene Weisen verarbeiten. In der einfachsten Form werden die Signale mit einem Vergleichspegel verglichen und eine ja-nein Information wird abgegeben. Bei einer anderen Gestaltung, z.B. auf eine analoge Messung eingestellt, kann der Abstand zwischen dem Gegenstand und der Schleife usw. mitgeteilt werden. Im Bedarfsfall (z.B. in einer geräuschvollen Umgebung) kann eine logische Fehlerkorrektur oder Pegelumwandlung vorgenommen werden.

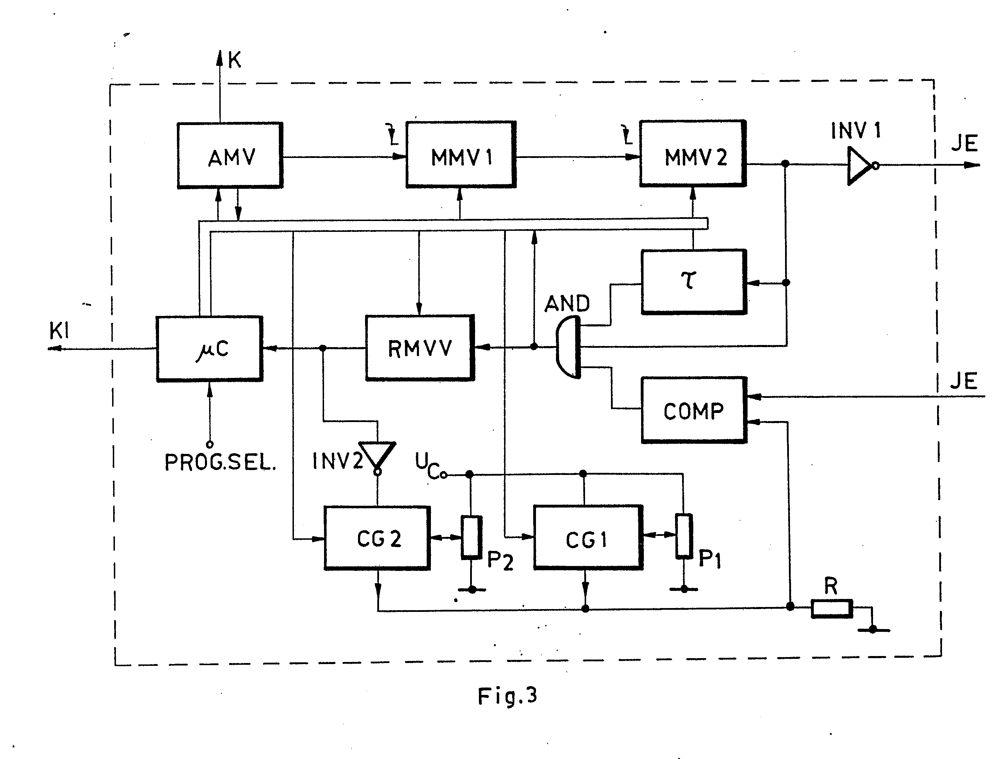

Aus den zahlreichen möglichen Schaltungsanordnungen der Steuereinheit V ist eine in der Fig. 3 veranschaulicht, wo

| AMV | - einen regelbaren astabilen Multivibrator, |
|---|---|
| MMV | - einen monostabilen Multivibrator, |
| RMMV | - einen wiederholt in Gang setzbaren monostabilen Multivibrator, |
| $\gamma$ | - ein Verzögerungselement, |
| AND | - ein UND-Tor, |
| INV | - einen Inverter, |
| COMP | - einen Komparator, |
| $\mu$C | - einen Mikrocomputer (aus den mehreren Programmen dient der Eingang PROG.SEL. zur gewünschten Wahl), |
| CG | - einen regelbaren Stromgenerator, |
| P | - das Regelelement des Stromgenerators, |
| R | - einen Widerstand, |
| $U_C$ | - eine Gleichspannung |

bezeichnen.

In einfacheren Fällen können die Elemente $\mu$C, RMMV, INV2, CG2 und P2, sowie die Elemente CG1 und R einzeln oder gemeinsam weggelassen werden. Sind CG1 und R nicht vorhanden, so schließt der Referenzeingang des Komparators COMP unmittelbar an das Element plan.

Zunächst wird der Fall überprüft, wenn die Steuereinheit V den Mikrocomputer $\mu$C nicht enthält.

In diesem Fall wird die Periodenzeit der Messung von dem regelbaren astabilen Multivibrator AMV gesteuert, während die einzelnen Teilzeiten, so auch die Probeentnahme, von den einander anlassenden monostabilen Multivibratoren MMV1, MMV2 sowie von dem Verzögerungselement $\tau$ gesteuert werden. Unter Zuhilfenahme des Stromgenerators CG1 kann der Vergleichspegel eingestellt werden, während mit dem Stromgenerator CG2 die Hystherese eingestellt werden kann, der insbesondere in einer geräuschvollen Umgebung eine große Bedeutung beigemessen wird.

Die Zeiteinstellung des monostabilen wiederholt in Gang setzbaren Multivibrators RMMV ist zweckmäßig geringfügig länger als die Periodenzeit des astabilen Multivibrators AMV. Dadurch kann ein kontinuierlicher Signalpegel an dem Ausgang KI erreicht werden.

Sollte die Steuereinheit V einen Mikrocomputer µC enthalten, so kann der Mikrocomputer µC die Funktion der Mehrheit der in Fig. 3 dargestellten Elemente (AMV, MMV1, MMV2, $\tau$, INV1, INV2, AND, RMMV) übernehmen. In einer geräuschvollen Umgebung kann der Mikrocomputer µC über mehrere Programme mit Fehlerkorrektur verfügen.

Bei einer einfachen Version wird eine Änderung des Meßergebnisses erst dann angenommen, wenn diese wenigstens über zwei oder drei Perioden aufrechterhalten wird. Bei der erwähnten Version kontrolliert der Mikrocomputer µC gemäß einem erweiterten Programm die Richtigkeit der Änderung des Meßergebnisses mit einer wesentlich kürzeren Periodenzeit als die Periodenzeit der normalen Messung.

Der Mikrocomputer µC kann eine analoge Messung, z.B. durch Regeln des Referenzpegels des Komparators COMP durchführen. Über die in den Fig. 1 und 2 veranschaulichten Versionen hinaus können die Schleifendetektoren mit Wirbelstrom in zahlreichen Ausführungen realisiert werden, wie
z.B. die folgenden:

1. Es kommt häufig vor, daß die Schleife von der die
   Information sammelnden und die Energie liefernden
   Stelle fern liegt, und die Schaltung der von den
   Schleifen $H_G$ (H) beanspruchten bedeutenden Ströme
   mit Schwierigkeiten verbunden ist.

   In diesem Fall ist bei einer Ausführungsform des
   Wirbelstrom-Schleifendetektors vor oder nach dem
   Schaltelement K ein lokaler Energieumwandler, zweckmäßig ein Transverter vorgesehen, wodurch in der
   Leitung bei einer höheren Spannung niedriger Strom
   fließen kann.

2. Gleicherweise werden die Funktionen des Steuerstromkreises V des Wirbelstrom-Schleifendetektors bei voneinander fern liegenden Meßstellen in zwei Teile aufgeteilt:

   Im Sinne dieser Unterteilung ist jener Teil des Steuerstromkreises V, der zur Bedienung der in der Nähe
   der Schleifen $H_G$, $H_M$ (H) befindlichen Schaltungselemente unbedingt erforderlich ist (nach Fig. 3 die
   Elemente MMV1, MMV2, INV1, AND, $\tau$, COMP und P1) in
   derselben Einheit angeordnet, während der andere, die
   logische Signalverarbeitung durchführende Teil (nach
   der Fig. 3 die Elemente AMV, RMMV, μC) z.B. an der
   Informationssammelstelle oder im Zentrum angeordnet
   ist.

3. Ein mehrere Wirbelstrom-Schleifendetektoren enthaltendes System kann vorzugsweise so ausgestaltet werden,

0071873

daß der zentrale Teil der geteilten Steuereinheiten ein gemeinsamer Teil ist.

4. Bei einem Detektor mit geteilter Steuereinheit verfügt die eine Version des Wirbelstrom-Schleifendetektors über einen oder mehrere, zwischen den beiden Einheitsteilen angeordneten,zur Signalübertragung dienende Kanäle sowie Anpaßeinheiten. Der (die) Kanal (Kanäle) ist (sind) entweder auf einer separaten Ader, oder auf der zur Energieübertragung dienenden Ader ausgestaltet.

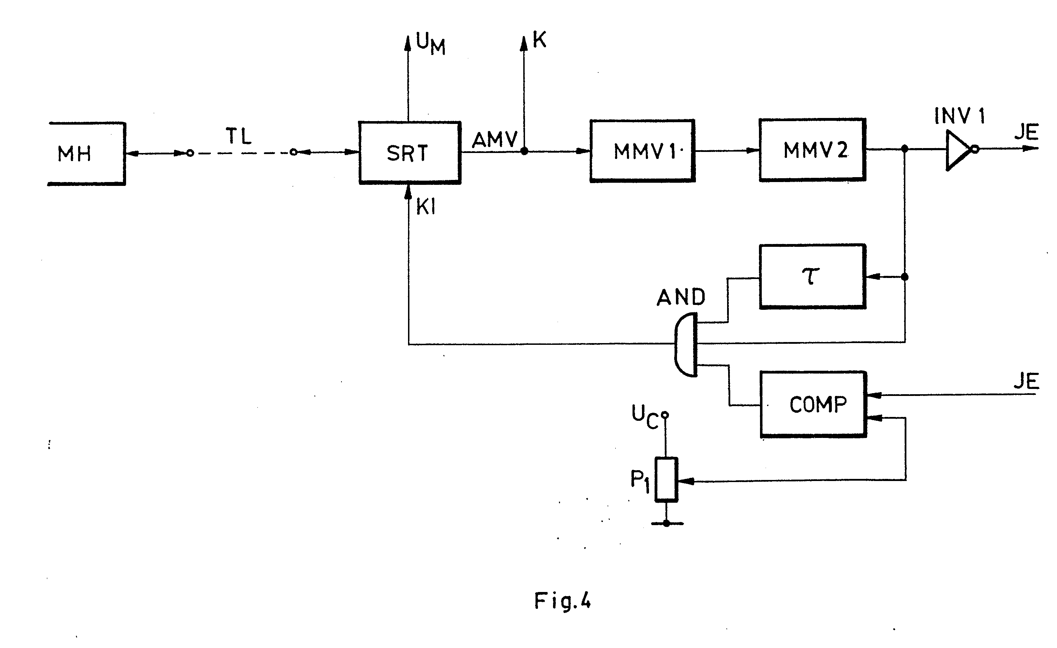

Eine Version der letzten Lösung ist in der Fig. 4 dargestellt, wo

MH = die Stelle der Meßergebnisverarbeitung,
SRT = eine Sender-Empfänger- und Speiseenergietrenneinheit,
TL = eine Leitung für die Energie- und Datenübertragung,

bezeichnen.

5. Bei gewissen Ausführungsformen kann (können) in den Wirbelstrom-Schleifendetektoren zur Unterdrückung des magnetischen Geräusches der Umgebung die Schleife(n) vorteilhaft als kompensierte Schleife(n) ausgestaltet werden.

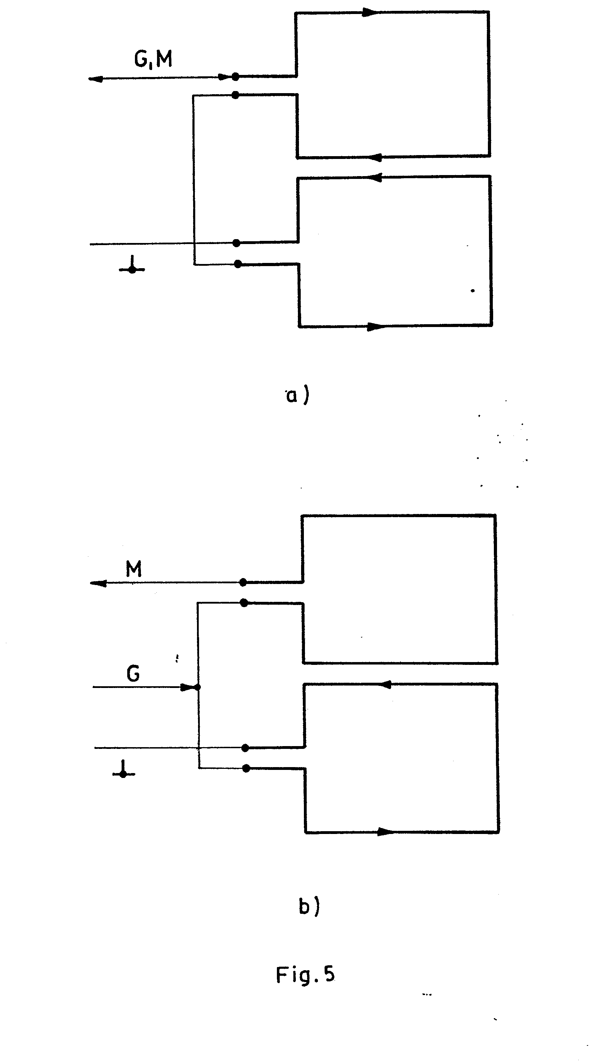

Die einfachsten kompensierten Schleifenvariationen sind in der Fig. 5 veranschaulicht. Eine derartige Schleifengestaltung ist zur Unterdrückung bzw. Verminderung der magnetischen Störungen bestens geeignet, da die Änderung des Störflusses in den zueinander entgegengesetzt gewickelten Schleifenelementen Spannungen von entgegengesetztem Vorzeichen induziert.

Die an den Klemmenpunkten der Schleife vorhandene Spannung ist mit der Summe der Spannungen der einzelnen Schleifenelemente gleich, d.h. daß die Spannungen entgegengesetzten Vorzeichens voneinander subtrahiert werden.

Wenn das Maß der Änderung des Störflusses in den beiden, in entgegengesetztem Sinn gewickelten Schleifenelementen identisch ist, wird die Störung vollkommen kompensiert.

Dabei wird die Wahrnehmung des Nutzsignals von der gezeigten Schleifengestaltung nur in geringem Maße beeinflußt.

Bei allen Ausführungsformen des erfindungsgemäßen Verfahrens wird die wichtigste Forderung, daß die Messung einen absoluten Charakter aufweisen soll, vollkommen erfüllt. Von der Schleife sich entfernend, bei das 3- bis 5-fache des Durchmessers überschreitenden Entfernungen, nimmt die Wirbelstromrückwirkung mit der sechsten Potenz der Entfernung ab (bei induktiven Detektoren nur mit der Kubikzahl); so können die fern liegenden elektrisch leitenden Gegenstände ganz und gar außer Acht gelassen werden.

Wenn sich nun kein elektrisch leitender Gegenstand in der Nähe der Schleife befindet, ist das meßbare Signal gleich Null, während es beim Erscheinen eines Gegenstands wesentlich von Null abweicht.

Der oben beschriebene Wirbelstrom-Schleifendetektor kann auf zahlreichen Gebieten zur Erkennung von elektrisch leitenden Gegenständen verwendet werden; die Vorteile werden am deutlichsten in solchen Fällen, wenn z.B.

- die Verunreinigung der Umgebung groß ist (Staub,

0071873

Schmutz, Regen, Nebel, Schnee usw.),

- die Temperatur sich schnell und in einem großen Maß ändert,

- die Meßschleife einer gewissen Deformation ausgesetzt ist,

- eine kontinuierliche Messung ohne Nachstellung gefordert wird.

0071873

PATENTANSRPÜCHE:

1.  Verfahren zum Wahrnehmen von Gegenständen mit einer Leiterschleife, dadurch g e k e n n z e i c h n e t , daß das Verfahren aus den folgenden drei Phasen besteht:

    -   die Leiterschleife wird während einer minimalen Dauer mit Gleichstromerregung versorgt, während der Fluß der Schleife trotz der in dem elektrisch leitenden, sich im Bereich der Schleife befindenden Gegenstands oder in dessen Oberflächenschicht entstehenden Wirbelströmen in einem dem statischen Zustand annähernden Maß in den Gegenstand eindringt,

    -   die Erregung der Leiterschleife wird unterbrochen und man wartet darauf, bis in der Schleife die selbstinduktiven transienten Erscheinungen praktisch beendet sind,

    -   in der Leiterschleife wird die Spannung gemessen, die von der langsamen Abnahme des Flusses induziert wird, der seinerseits von den in dem Gegenstand fließenden Wirbelströmen, die eine entgegengesetzte Polarität wie beim Einschalten aufweisen, aufrechterhalten wird.

2.  Verfahren nach Anspruch 1, dadurch g e k e n n z e i c h n e t , daß durch wiederholte Durchführung der drei Phasen eine kontinuierliche Messung durchgeführt wird.

3.  Verfahren nach Anspruch 1 oder 2, dadurch g e k e n n z e i c h n e t , daß in der

0071873

dritten Phase die Messung mit Probeentnahme durchgeführt wird.

4. Schaltungsanordnung zum Wahrnehmen eines Gegenstands
mit einer Leiterschleife,
dadurch g e k e n n z e i c h n e t , daß die Anordnung aus einer Erregerschleife ($H_G$) und einer Meßschleife ($H_M$) besteht, die Erregerschleife ($H_G$) über
ein Schaltelement (K) mit Gleichspannung ($U_M$) verbunden ist, die Meßschleife ($H_M$) über einen Signalformer-
Verstärkerstromkreis (JE) an einen Steuerstromkreis
(V) angeschlossen ist, der über einen Informationsausgang (KI) verfügt, und der eine Ausgang des Steuerstromkreises (V) mit dem Steuereingang des Schaltelements (K) verbunden ist, während der andere Ausgang mit dem Inhibitionseingang des Signalformer-Verstärkerstromkreises (JE) verbunden ist.

5. Schaltungsanordnung nach Anspruch 4,
dadurch g e k e n n z e i c h n e t , daß zwischen
die Klemmen der Erregerschleife ($H_G$) ein Überspannungsgrenzer (TG) geschaltet ist.

6. Schaltungsanordnung nach Anspruch 4 oder 5,
dadurch g e k e n n z e i c h n e t , daß die Erregerschleife ($H_G$) und die Meßschleife ($H_M$) als eine
einzige gemeinsame Schleife (H) ausgestaltet sind.

7. Schaltungsanordnung anch einem der Ansprüche 4 bis 6,
dadurch g e k e n n z e i c h n e t , daß zwischen
dem Schaltelement (K) und der Gleichspannung ($U_M$) ein
lokaler stromanpassender Energieumwandler vorgesehen
ist.

8. Schaltungsanordnung nach einem der Ansprüche 4 bis 6,

dadurch g e k e n n z e i c h n e t , daß zwischen das Schaltelement (K) und die Erregerschleife ($H_G$) ein lokaler stromanpassender Energieumwandler geschaltet ist.

9.　Schaltungsanordnung nach einem der Ansprüche 4 bis 8, dadurch g e k e n n z e i c h n e t , daß der Steuerstromkreis (V) in zwei Teile unterteilt ist, wobei der die unmittelbare Steuerung der die Schleife (H) bedienenden Stromkreise sicherstellende Teil in der Nähe der Schleife, der andere Teil fern der Schleife (H), z.B. in einer zentralen Meßstelle angeordnet ist.

10.　Schaltungsanordnung nach einem der Ansprüche 4 bis 9, dadurch g e k e n n z e i c h n e t , daß mehrere Schleifen (H) enthalten sind, die teilweise mit einem gemeinsamen Steuerstromkreis versehen sind.

11.　Schaltungsanordnung nach einem der Ansprüche 4 bis 10, dadurch g e k e n n z e i c h n e t , daß die entlang der magnetischen Kraftlinien des Störflusses, an einer darauf senkrecht verlaufenden Fläche erzeugbare Projektion der Meßschleife ($H_M$) wenigstens ein solches Schleifenelement enthält, dessen Wicklungsrichtung derjenigen der übrigen Schleifenelemente entgegengesetzt ist.

Fig.1

Fig.2

0071873

Fig.3

Fig.4

0071873

G,M

a)

M

G

⊥

b)

Fig. 5